# EUROPEAN PATENT SPECIFICATION

(11) **EP 2 112 405 B1**
(45) Date of publication and mention of the grant of the patent: **13.02.2013**
(21) Application number: 09251142.7
(22) Date of filing: 21.04.2009
(51) Int. Cl.: F16H 57/04

(54) **Structure for lubricating power transmission device**
Struktur zur Schmierung einer Kraftübertragungsvorrichtung
Structure de lubrification de dispositif de transmission de puissance

(30) Priority: 22.04.2008 JP 2008111244
(43) Date of publication of application: 28.10.2009
(73) Proprietor: Toyota Jidosha Kabushiki Kaisha, Toyota-shi, Aichi-ken 471-8571 (JP)
(72) Inventor: Yoshii, Kinya c/o Toyota Jidosha Kabushiki Kaisha, Toyota-shi, Aichi-ken 471-8571 (JP)
(74) Representative: Albutt, Anthony John

(56) References cited:
- FR-A- 2 613 015
- JP-A- 7 293 674
- JP-A- 11 247 865
- US-A- 4 771 648
- US-A- 6 110 070

## Description

### BACKGROUND OF THE INVENTION

### 1. Field of the Invention

The invention relates generally to a structure for lubricating a power transmission device, and more specifically to a structure for lubricating a power transmission device, with which lubricant oil drawn up by a gear is supplied to portions that need lubrication.

### 2. Description of the Related Art

A structure for lubricating a power transmission device is described in, for example, Japanese Utility Model Application Publication No. 5-1100 (JP-U-5-1100). JP-U-5-1100 describes a lubricant oil supply device that removes foreign matter from the lubricant oil that is supplied to the bearing to extend the life of the bearing. The lubricant oil supply device has an oil reservoir and an oil channel. The lubricant oil drawn up by a gear within a housing during an operation of a transmission is accumulated in the oil reservoir. Through the oil channel, the lubricant oil that flows out of the oil reservoir is introduced into a passage formed in a shaft.

Japanese Patent Application Publication No. 7-293674 (JP-A-7-293674) describes a mechanism for lubricating a transmission, with which portions that need lubrication are effectively lubricated with the minimum amount of lubricant oil. Japanese Patent Application Publication No. 11-247865 (JP-A-11-247865) describes a structure for fitting an oil channel, with which a seating face for fitting the oil channel need to be formed in neither a case nor a bearing and the number of man-hours needed to fit the oil channel and the number of components are reduced. JP-A-7-293674 describes an oil receiver used to introduce the oil into a hollow shaft. JP-A-11-247865 describes the oil channel through which the oil is introduced into a hollow shaft.

In the lubricant oil supply device described in JP-U-5-1100, the lubricant oil is introduced into the shaft through the oil channel to lubricate a needle bearing for a shifting gear, which supports the shaft. In this case, if the oil channel rotates together with the shaft, a portion of the oil channel, which contacts the shaft is worn away. Therefore, the oil channel needs to be provided with a rotation stopper. However, if the rotation stopper is provided at a certain position, the lubricant oil that is supposed to be introduced into the shaft may leak to the outside of the shaft through the rotation stopper. FR 2 613 015 discloses a structure of lubricating a power transmission device falling under the wording of the preamble of claim 1.

### SUMMARY OF THE INVENTION

The invention provides a structure for lubricating a power transmission device according to claim 1, with which oil leakage is suppressed. Dependent claims 2-7 concern particular embodiments of the invention of claim 1.

The structure includes a shaft member that has a hollow portion, and that transmits rotative power; a case body that houses the shaft member; and an oil cover that is fitted to the case body, that extends into the shaft member, and that introduces lubricant oil into the shaft member. The case body has a recess used as an oil passage through which the lubricant oil is introduced to the oil cover. The oil cover includes a projection that is fitted in the recess.

With such a structure, a rotation stopper mechanism in which the projection of the oil cover is fitted in the recess of the case body prevents the oil cover from rotating together with the shaft member. The recess in which the projection of the oil cover is fitted is used as an oil passage through which the lubricant oil is introduced to the oil cover. Therefore, a recess in which the rotation stopper is fitted need not be formed aside from the recess used as an oil passage. Accordingly, oil leakage through the recess in which the rotation stopper is fitted does not occur. Therefore, it is possible to suppress leakage of the lubricant oil that is supposed to be introduced into the shaft member through the oil cover.

In such a groove depth of the recess in a direction of the central axis of the shaft member is greater than a projection length of the projection in the direction of the central axis. With this structure, the oil passage formed of the recess is not blocked by the projection.

Therefore, the lubricant oil is more reliably introduced to the oil cover.

In such a structure, the recess may include a first recess and a second recess which is formed into the first recess, and in which the projection is fitted. In the structure, the projection length of the projection is set in such a manner that the projection is able to be fitted in the second recess. Therefore, even if the oil cover is fitted to the case body in the state where the projection is not fitted in the recess during production of the power transmission device, inappropriate fitting is easily recognized. The second recess may be recessed relative to a bottom face of the first recess.

In such a structure, the oil cover may have such translucency that the recess is visible when the case body is viewed through the oil cover. This structure makes it easier to accurately fit the projection in the recess when the oil cover is fitted to the case body.

In such a structure, one end of the case body may be an open end and the other end of the case body may be a closed end. The case body may be a cylindrical member that extends along the rotational axis of the shaft member. The recess may be formed at the closed end. With the structure, it is possible to obtain the effects described above in the power transmission device in which the oil cover is disposed near the closed end of the case body.

In such a structure, the recess and the projection may be formed at positions above the bottom of the hollow portion. The recess may extend from a position above the shaft member in the vertical direction toward the rotational axis of the shaft member. In such a structure, the oil cover includes a cylindrical portion that has a cylindrical shape and that is disposed in the shaft member with a predetermined clearance left between the shaft member and the cylindrical portion, a flange portion that extends outward from an end of the cylindrical portion in a radial direction of the oil cover, and the projection projects from a surface of the flange portion. Such a structure may further include an oil guide of which one end reaches the recess, and through which the lubricant oil in the case body is introduced into the recess.

As described above, the invention provides the structure for lubricating a power transmission device, with which oil leakage is suppressed.

### BRIEF DESCRIPTION OF THE DRAWINGS

The features, advantages, and technical and industrial significance of this invention will be described in the following detailed description of embodiments of the invention with reference to the accompanying drawings, in which like numerals denote like elements, and wherein:
FIG 1 is a cross-sectional view showing a manual transmission which is mounted in a vehicle according to a first embodiment of the invention;
FIG 2 is an enlarged cross-sectional view showing a portion surrounded by a two-dot chain line II in FIG 1;
FIG 3 is a cross-sectional view showing the manual transmission taken along the line III-III in FIG 2;
FIG 4 is a perspective view showing an oil cover in FIG 2;
FIG 5 is a cross-sectional view showing a manual transmission according to a comparative example (constituting state of the art);
FIG. 6 is a cross-sectional view showing the manual transmission taken along the line VI-VI in FIG 3;
FIG 7 is a cross-sectional view showing a step of production of the manual transmission shown in FIG 2; and
FIG 8 is a cross-sectional view showing a structure for lubricating a manual transmission according to a second embodiment of the invention.

### DETAILED DESCRIPTION OF EMBODIMENTS

Hereafter, embodiments of the invention will be described with reference to the attached drawings. In the drawings referred in the description below, the same or corresponding components are denoted by the same reference numerals.

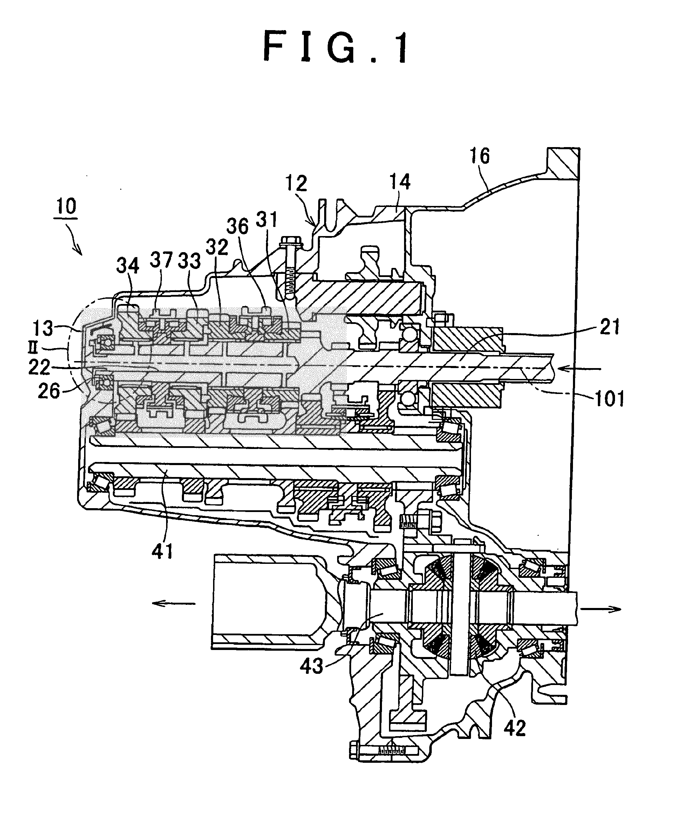

Hereafter, a first embodiment of the invention will be described. A manual transmission 10 shown in FIG 1 is mounted in a vehicle. In response of an operation of a shift lever performed by a driver, the manual transmission 10 reduces or increases the speed of rotation generated in a power source, or reverse the rotation generated in the power source, and then outputs the rotation to drive wheels.

The manual transmission 10 includes a transmission case 12, an input shaft 21, and drive gears 31 to 34 used to shift gears. The input shaft 21 and the drive gears 31 to 34 are housed in the transmission case 12.

The input shaft 21 may rotate about a central axis 101, which is an imaginary axis. The input shaft 21 is rotated by rotative power transmitted from an engine (not shown). The drive gears 31 to 34 are fitted on the outer periphery of the input shaft 21 in such a manner that the drive gears 31 to 34 are aligned in the direction of the central axis 101. The drive gears 31 to 34 may rotate relative to the input shaft 21. A hub sleeve 36 is provided between the drive gear 31 and the drive gear 32, and a hub sleeve 37 is provided between the drive gear 33 and the drive gear 34. The hub sleeve 36 and the hub sleeve 37 each include a predetermined synchronizer mechanism.

An end of the transmission case 12 is an open end 14, and the other end of the transmission case 12 is a closed end 13. The transmission case 12 is a cylindrical member that extends along the direction of the central axis 101. A cylindrical transaxle case 16 is fitted to the open end 14 of the transmission case 12.

The input shaft 21 has a hollow portion 22 that extends in the direction of the central axis 101. Through-holes, which extend from the central axis 101 in the radial direction of the input shaft 21, are formed in the input shaft 21. The hollow portion 22 is connected, through these through-holes, to a face of the input shaft 21 on which the drive gears 31 to 34 rotate relative to the input shaft 21.

The hub sleeve 36 or the hub sleeve 37 is operated in response to an operation of the shift lever performed by the driver. Thus, the drive gear selected from among the drive gears 31 to 34 based on the desired gear is locked to the input shaft 21, and rotates together with the input shaft 21. The rotation of the input shaft 21 is transmitted to an output shaft 41 and then transmitted to a differential 42 via meshed gears, thereby rotating right and left drive shafts 43 of the vehicle.

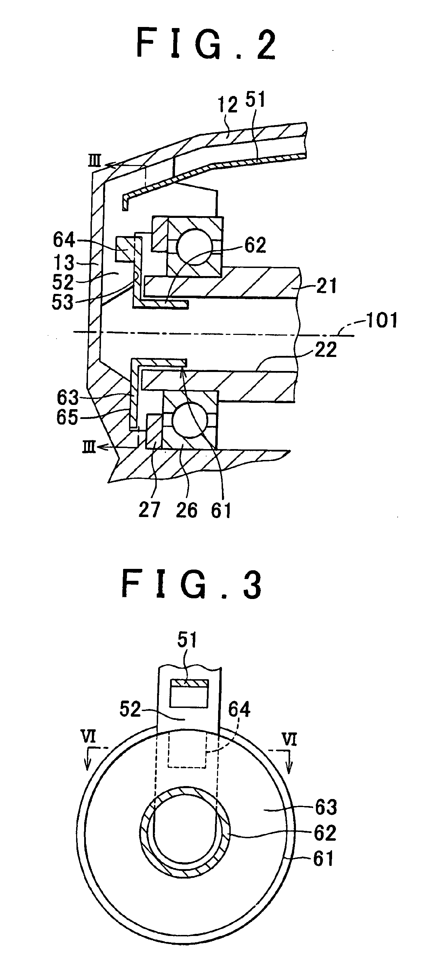

As shown in FIGs. 2 and 3, the transmission case 12 is provided with a bearing 26 that rotatably supports the input shaft 21, and a shim 27 that adjusts the position of the bearing 26. The transmission case 12 is provided with an oil guide 51. The oil guide 51 is a gutter-shaped member that extends along an inner wall of the transmission case 12. The oil guide 51 is disposed above the input shaft 21 in the vertical direction.

The transmission case 12 has a case-side groove 52 that serves as an oil passage. The transmission case 12 has a fitting face 53 that defines the inner wall of the closed end 13. The case-side groove 52 is a recess, and is recessed relative to the fitting face 53. The case-side groove 52 extends downward in the vertical direction. More specifically, the case-side groove 52 extends from a position above the input shaft 21 in the vertical direction toward the rotational axis (central axis 101) of the input shaft 21. An end portion of the oil guide 51, which extends toward the closed end 13 of the transmission case 12, reaches the case-side groove 52.

The manual transmission 10 further includes an oil cover 61 fitted to the transmission case 12. The oil cover 61 is made of resin. The oil cover 61 extends from the case-side groove 52 into the hollow portion 22 of the input shaft 21 so that the oil flowing through the case-side groove 52 is introduced into the hollow portion 22. The oil cover 61 includes a rotation stopper 64 that is fitted in the case-side groove 52. With this structure, the oil cover 61 is prevented from rotating together with the input shaft 21 when the manual transmission 10 is driven. Thus, abrasion and thermal deformation of the oil cover 61 are prevented. The material of the oil cover 61 is not limited to resin. For example, the oil cover 61 may be made of metal.

With reference to FIGs. 2 to 4, the shape of the oil cover 61 will be described in more detail. The oil cover 61 includes a cylindrical portion 62 and a flange portion 63 in addition to the rotation stopper 64. The cylindrical portion 62 has a cylindrical shape, and is disposed in the hollow portion 22 with a predetermined amount of clearance left between the cylindrical portion 62 and the input shaft 21. The flange portion 63 is a collar-shaped member that extends from an end portion of the cylindrical portion 62 outward in the radial direction of the cylindrical portion 62. The flange portion 63 is positioned on the fitting face 53. The rotation stopper 64 projects from a face 65 of the flange portion 63 that faces the fitting face 53.

The oil is stored in the transmission case 12. When the rotative power is transmitted to the input shaft 21, the oil is drawn up by rotating gears. The drawn up oil is introduced toward the closed end 13 of the transmission case 12 through the oil guide 51. The oil introduced toward the closed end 13 flows through the case-side groove 52 and is introduced to the oil cover 61. The oil is introduced into the hollow portion 22 though the oil cover 61, and supplied, as the lubricant oil, to the face of the input shaft 21 on which the drive gears 31 to 34 rotate relative to the input shaft 21.

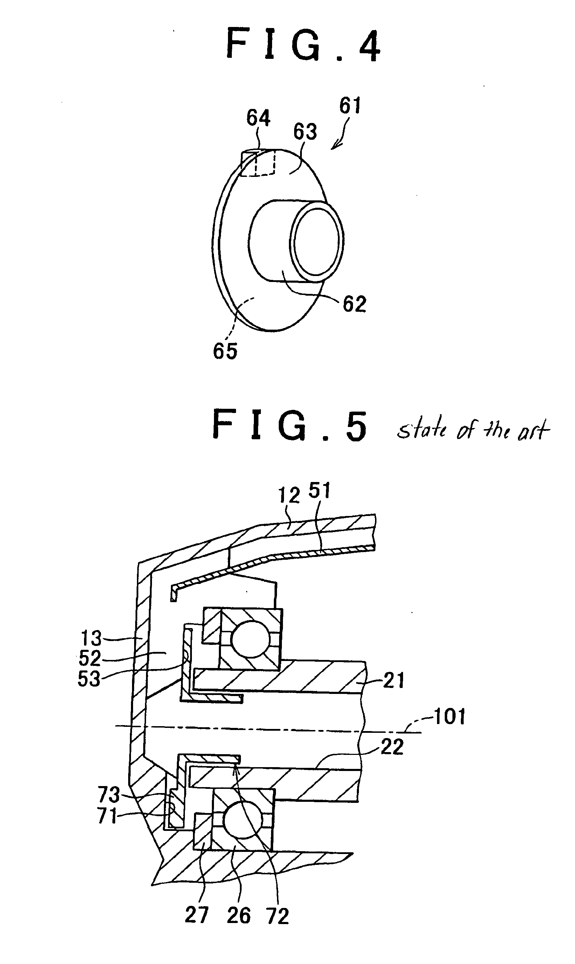

FIG 5 is a cross-sectional view showing a manual transmission according to a comparative example, and corresponds to FIG 2. In the comparative example shown in FIG 5, an oil cover 72 that includes a rotation stopper 73 is provided in place of the oil cover 61 shown in FIG 2. The transmission case 12 in the comparative example has a rotation stopper groove 71 in addition to the case-side groove 52. The rotation stopper groove 71 is formed at a position that is on the opposite side of the central axis 101 from the case-side groove 52. The rotation stopper groove 71 is positioned below the hollow portion 22 in the vertical direction. The rotation stopper 73 of the oil cover 72 is fitted in the rotation stopper groove 71.

In the comparative example shown in FIG 5, the rotation stopper groove 71 used to prevent the oil cover 72 from rotating together with the input shaft 21 is formed at a position below the case-side groove 52 in the vertical direction. Therefore, part of the oil that flows through the case-side groove 52 may leak to the outside of the input shaft 21 through the rotation stopper groove 71 and a space between balls of the bearing 26.

In contrast, according to the first embodiment of the invention, the rotation stopper 64 is fitted in the case-side groove 52, as shown in FIG 2. Therefore, it is no longer necessary to form a rotation stopper groove aside from the case-side groove 52. This makes it possible to suppress leakage of the lubricant oil that is supposed to be introduced into the hollow portion 22.

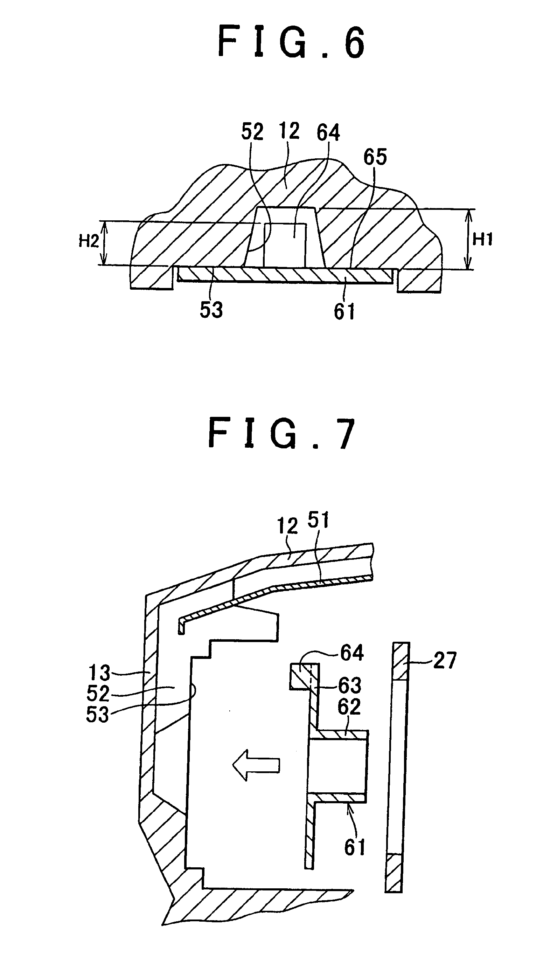

As shown in FIG 6, according to the first embodiment of the invention, a groove depth H1 of the case-side groove 52 (length from the fitting face 53 to a bottom face of the case-side groove 52) is greater than a projection length H2 of the rotation stopper 64 (length from the face 65 to an end of the rotation stopper 64). With this structure, the rotation stopper 64 does not contact the bottom face of the case-side groove 52. Therefore, a space through which the oil is introduced into the case-side groove 52 is reliably ensured.

As shown in FIG 7, when the manual transmission 10 is produced, the oil cover 61 and the shim 27 having an adjusted thickness are fitted to the transmission case 12 in this order with the use of, for example, grease. Next, the transmission case 12, to which the oil cover 61 and the shim 27 are fitted, is fitted onto the input shaft 21.

According to the first embodiment of the invention, the oil cover 61 has such translucency that the case-side groove 52 is visible when the transmission case 12 is viewed through the oil cover 61. The translucency of the oil cover 61 need not be high enough that the shape of the case-side groove 52 is entirely recognized. The translucency of the oil cover 61 is sufficient if the presence of the case-side groove 52 is recognized.

In the manual transmission 10 shown in FIG 1, the oil cover 61 is fitted to the closed end 13 of the transmission case 12, which is the innermost portion of the transmission case 12. Therefore, when the oil cover 61 is fitted to the transmission case 12, it is difficult to accurately fit the rotation stopper 64 in the case-side groove 52. Therefore, the oil cover 61 may be inappropriately fitted to the transmission case 12. In contrast, according to the first embodiment of the invention, because a translucent member is used as the oil cover 61, it is possible to fit the rotation stopper 64 in the case-side groove 52 while visually checking the case-side groove 52. This makes it easier to accurately fit the rotation stopper 64 in the case-side groove 52. As a result, the oil cover 61 is not fitted to the transmission case 12 inappropriately.

A structure for lubricating the manual transmission 10 which serves as a power transmission device in the first embodiment of the invention includes the input shaft 21 that is as a hollow shaft member which transmits the rotative power, the transmission case 12 that is a case body which houses the input shaft 21, and the oil cover 61. The oil cover 61 is fitted to the transmission case 12. The oil cover 61 extends into the input shaft 21, and introduces the lubricant oil into the input shaft 21. The transmission case 12 has the case-side groove 52 that is a recess used as an oil passage through which the lubricant oil is introduced to the oil cover 61. The oil cover 61 includes the rotation stopper 64 that is a projection which is fitted in the case-side groove 52.

With the structure for lubricating the manual transmission 10 according to the first embodiment of the invention, the oil flowing through the case-side groove 52 is reliably introduced into the hollow portion 22 of the input shaft 21. Therefore, it is possible to supply a sufficient amount of lubricant oil to the face of the input shaft 21 on which the drive gears 31 to 34 rotate relative to the input shaft 21. Thus, it is possible to improve the reliability of the manual transmission 10.

Hereafter, a second embodiment of the invention will be described. A structure for lubricating a manual transmission according to the second embodiment of the invention is basically the same as the structure for lubricating the manual transmission 10 according to the first embodiment of the invention. The components that are the same as those in the first embodiment of the invention will not be described below.

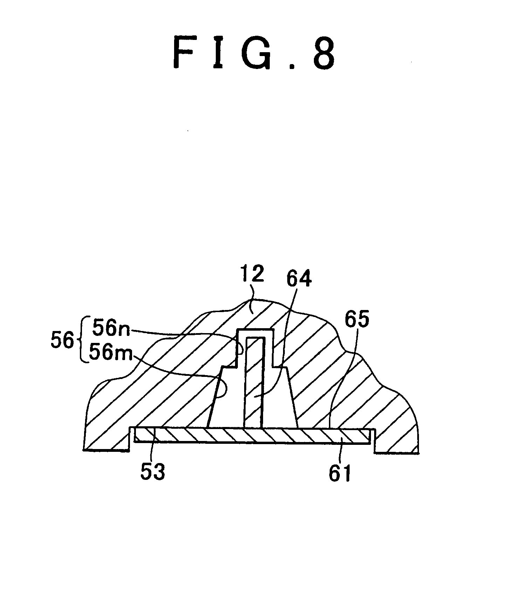

FIG 8 corresponds to FIG. 6 in the first embodiment of the invention. As shown in FIG 8, in the second embodiment of the invention, the transmission case 12 has a case-side groove 56 in place of the case-side groove 52 shown in FIG 6. The case-side groove 56 includes a first groove 56m that is a first recess and a second groove 56n that is a second recess. The first groove 56m is formed in a manner similar to the manner for forming the case-side groove 52 shown in FIG 6. The second groove 56n is formed inside the first groove 56m. More specifically, the second groove 56n is recessed relative to a bottom face of the first groove 56m. When the fitting face 53 is viewed in the direction of the central axis 101, the range of the second groove 56n is within the range of the first groove 56m. The rotation stopper 64 is fitted in the second groove 56n. The projection length of the rotation stopper 64 in the second embodiment of the invention is greater than the projection length of the rotation stopper 64 in the first embodiment of the invention shown in FIG 6.

In the first embodiment of the invention, as shown in FIG 6, the projection length of the rotation stopper 64 is reduced to the extent that the rotation stopper 64 carries out a function as a rotation stopper mechanism so that interruption of the flow of the oil through the case-side groove 52 by the rotation stopper 64 is minimized. Therefore, even if the rotation stopper 64 is not fitted in the case-side groove 52 and the oil cover 61 is inappropriately fitted to transmission case 12, only slight inclination of the input shaft 21 occurs. Accordingly, inappropriate fitting of the oil cover 61 may not be recognized when the transaxle case 16 is fitted to the transmission case 12. In contrast, according to the second embodiment of the invention, it is possible to set a long projection length of the rotation stopper 64 while ensuring a large oil flow passage area within the case-side groove 56. Therefore, if the rotation stopper 64 is not fitted in the case-side groove 56, the input shaft 21 is inclined significantly. Therefore, inappropriate fitting of the oil cover 61 is easily recognized. If the oil cover 61 is inappropriately fitted to the transmission case 12, a large clearance is created between the transmission case 12 and the transaxle case 16 when the transaxle case 16 is fitted to the open end 14 of the transmission case 12. This makes it possible to easily recognize inappropriate fitting of the oil cover 61.

With the structure for lubricating the manual transmission according to the second embodiment of the invention, it is possible to produce the same effects as those in the first embodiment of the invention. In addition, according to the second embodiment of the invention, it is possible to more effectively prevent the oil cover 61 from being inappropriately fitted to the transmission case 12.

The embodiments of the invention that have been disclosed in the specification are to be considered in all respects as illustrative and not restrictive. The technical scope of the invention is defined by claims, and all changes which come within the meaning and range of equivalency of the claims are therefore intended to be embraced therein.

## Claims

1. A structure for lubricating a power transmission device, **characterized by** comprising:
a shaft member (21) that has a hollow portion and that transmits rotative power;
a case body (12) that houses the shaft member (21); and
an oil cover (61) that is fitted to the case body (12), that extends into the shaft member (21), and that introduces lubricant oil into the shaft member (21),
wherein
the case body (12) has a recess (52) used as an oil passage through which the lubricant oil is introduced to the oil cover (61), and
the oil cover (61) includes a projection that is fitted in the recess (52) wherein the oil cover (61) includes cylindrical portion (62) that has a cylindrical shape and that is disposed in the shaft member (21) with a predetermined clearance left between the shaft member (21) and the cylindrical portion (62), a flange portion (63) that extends outward from an end of the cylindrical portion (62) in a radial direction of the cylindrical portion (62), and the projection (64) projects from a surface of the flange portion,
**characterized in that** a groove depth (H1 - Fig.6), of the recess (52) in a direction of the central axis (101) of the shaft member (21) is greater than a projection length (H2-Fig.6) of the projection (64) in the direction of the central axis (101).

2. The structure according to claim 1, wherein the recess includes a first recess, (56 m) and a second recess (56n) which is formed into the first recess (56m) and in which the projection (64) is fitted.

3. The structure according to claim 2, wherein the second recess (56n) is recessed relative to a bottom face of the first recess (56m).

4. The structure according to any one of claims 1 to 3, wherein the oil cover (64) has such translucency that the recess is visible when the case body (12) is viewed through the oil cover.

5. The structure according to anyone of claims to 4, wherein:
one end of the case body (12) is an open end and the other end of the case body (12) is a closed end;
the case body (12) is a cylindrical member that extends along a rotational axis of the shaft member (21); and
the recess (52) is formed at the closed end.

6. The structure according to any one of claims 1 to 5, wherein the recess (52) extends from a position above the shaft member (21) in a vertical direction toward the rotational axis (101) of the shaft member (21).

7. The structure according to any one of claims 1 to 6, further comprising an oil guide (51) of which one end reaches the recess (52), and through which the lubricant oil in the case body (12) is introduced into the recess (52).

## Patentansprüche

1. Struktur zur Schmierung einer Kraftübertragungsvorrichtung, **gekennzeichnet durch** das Aufweisen von:
einem Wellenelement (21), das einen hohlen Abschnitt hat und das eine Drehkraft überträgt;
einem Gehäusekörper (12), der das Wellenelement (21) beherbergt; und
einer Ölabdeckung (61), die an den Gehäusekörper (12) angepasst ist, sich in das Wellenelement (21) erstreckt und Schmieröl in das Wellenelement (21) einführt,
wobei
der Gehäusekörper (12) eine Vertiefung (52) hat, die als ein Öldurchgang verwendet wird, **durch** den das Schmieröl zu der Ölabdeckung (61) eingeführt wird, und
die Ölabdeckung (61) einen Vorsprung hat, der in der Vertiefung (52) eingepasst ist, wobei die Ölabdeckung (61) einen zylindrischen Abschnitt (62), der eine zylindrische Form hat und der in dem Wellenelement (21) mit einem vorbestimmten Raum zwischen dem Wellenelement (21) und dem zylindrischen Abschnitt (62) eingerichtet ist, und einen Flanschabschnitt (63) hat, der sich nach außen von einem Ende des zylindrischen Abschnitts (62) in eine radiale Richtung des zylindrischen Abschnitts (62) erstreckt, und wobei der Vorsprung (64) von einer Fläche des Flanschabschnitts vorsteht,
**dadurch** gekennzeichnet, dass eine Nuttiefe (H1 - Fig. 6) der Vertiefung (52) in einer Richtung der Mittelachse (101) des Wellenelements (21) größer ist als eine Vorsprungslänge (H2-Fig. 6) des Vorsprungs (64) in der Richtung der Mittelachse (101) ist.

2. Struktur nach Anspruch 1, wobei die Vertiefung eine erste Vertiefung (56m) und eine zweite Vertiefung (56n) hat, die in der ersten Vertiefung (56m) ausgebildet ist und in der der Vorsprung (64) eingepasst ist.

3. Struktur nach Anspruch 2, wobei die zweite Vertiefung (56n) relativ zu einer unteren Seite der ersten Vertiefung (56m) vertieft ist.

4. Struktur nach einem der Ansprüche 1 bis 3, wobei die Ölabdeckung (64) eine derartige Lichtdurchlässigkeit hat, dass die Vertiefung sichtbar ist, wenn der Gehäusekörper (12) durch die Ölabdeckung betrachtet wird.

5. Struktur nach einem der Ansprüche 1 bis 4, wobei:
ein Ende des Gehäusekörpers (12) ein offenes Ende ist und das andere Ende des Gehäusekörpers (12) ein geschlossenes Ende ist;
der Gehäusekörper (12) ein zylindrisches Element ist, das sich entlang einer Drehachse des Wellenelements (21) erstreckt, und
die Vertiefung (52) an dem geschlossenen Ende ausgebildet ist.

6. Struktur nach einem der Ansprüche 1 bis 5, wobei die Vertiefung (52) sich von einer Position über dem Wellenelement (21) in einer vertikalen Richtung in Richtung der Drehachse (101) des Wellenelements (21) erstreckt.

7. Struktur nach einem der Ansprüche 1 bis 6, ferner mit einer Ölführung (51), von der ein Ende die Vertiefung (52) erreicht und durch die das in dem Gehäusekörper (12) befindliche Schmieröl in die Vertiefung (52) geführt wird.

## Revendications

1. Structure servant à lubrifier un dispositif de transmission de puissance, **caractérisée en ce qu'**elle comporte :
un élément (21) d'arbre qui est doté d'une partie creuse et qui transmet une puissance rotative ;
un corps (12) de carter qui renferme l'élément (21) d'arbre ; et
un couvercle (61) à huile qui est monté sur le corps (12) de carter, s'étend jusque dans l'élément (21) d'arbre et introduit de l'huile lubrifiante dans l'élément (21) d'arbre,
le corps (12) de carter présentant un évidement (52) utilisé comme passage d'huile à travers lequel l'huile lubrifiante est introduite dans le couvercle (61) à huile, et
le couvercle (61) à huile comprenant une protubérance qui est logée dans l'évidement (52),
le couvercle (61) à huile comprenant une partie cylindrique (62) qui présente une forme cylindrique et
qui est disposée dans l'élément (21) d'arbre, un jeu prédéterminé étant ménagé entre l'élément (21) d'arbre et la partie cylindrique (62), une partie (63) de flasque qui s'étend vers l'extérieur à partir d'une extrémité de la partie cylindrique (62) dans une direction radiale de la partie cylindrique (62), et la protubérance (64) dépassant d'une surface de la partie (63) de flasque,
**caractérisé en ce qu'**une profondeur de gorge (H1 - Fig. 6) de l'évidement (52) dans une direction de l'axe central (101) de l'élément (21) d'arbre est supérieure à une longueur de protubérance (H2 - Fig. 6) de la protubérance (64) dans la direction de l'axe central (101).

2. Structure selon la revendication 1, l'évidement comprenant un premier évidement (56m) et un deuxième évidement (56n) qui est formé dans le premier évidement (56m) et dans lequel la protubérance (64) est logée.

3. Structure selon la revendication 2, le deuxième évidement (56n) étant en retrait par rapport à une face de fond du premier évidement (56m).

4. Structure selon l'une quelconque des revendications 1 à 3, le couvercle (61) à huile présentant une translucidité telle que l'évidement (52) est visible lorsque le corps (12) de carter est vu à travers le couvercle à huile.

5. Structure selon l'une quelconque des revendications 1 à 4 :
une extrémité du corps (12) de carter étant une extrémité ouverte et l'autre extrémité du corps (12) de carter étant une extrémité fermée ;
le corps (12) de carter étant un élément cylindrique qui s'étend le long d'un axe de rotation de l'élément (21) d'arbre ; et
l'évidement (52) étant formé à l'extrémité fermée.

6. Structure selon l'une quelconque des revendications 1 à 5, l'évidement (52) s'étendant d'une position située au-dessus de l'élément (21) d'arbre dans une direction verticale vers l'axe (101) de rotation de l'élément (21) d'arbre.

7. Structure selon l'une quelconque des revendications 1 à 6, comportant en outre un guide (51) d'huile dont une extrémité atteint l'évidement (52) et à travers lequel l'huile lubrifiante présente dans le corps (12) de carter est introduite dans l'évidement (52).
